Europäisches Patentamt

European Patent Office

Office européen des brevets

(19)

(11) Publication number: **0 454 467 A1**

# (12) EUROPEAN PATENT APPLICATION

(21) Application number: **91303764.4**

(22) Date of filing: **25.04.91**

(51) Int. Cl.⁵: **H04Q 9/00, H04L 5/14, H04L 12/28**

(30) Priority: **27.04.90 GB 9009556**

(43) Date of publication of application:
**30.10.91 Bulletin 91/44**

(84) Designated Contracting States:
**DE FR GB IT NL**

(71) Applicant: **ROTORK INSTRUMENTS LIMITED**
**Protech House, 241 Selbourne Road**
**Luton LU4 8NP (GB)**

(72) Inventor: **Marshall, Richard C.**
**The Dappled House, 30 Ox Lane**
**Harpenden, Herts AL5 4HE (GB)**
Inventor: **Hodkin, Michael J.**
**39 Coppice Mead, Stotfold**
**Hitchin, Herts SG5 4JY (GB)**
Inventor: **Williams, Frederick J.**
**6 Greenway, Campton**
**Shefford, Beds SG 17 5BN (GB)**

(54) Data transmission and collection using a matrixed wire medium.

(57) A slave station at a crosspoint of a matrix achieves bidirectional data flow by receiving variable-length current pulses, via for example galvanic isolator (3b), and transmitting a variable voltage-drop across resistor (3f). A number of bits of digital data may be presented sequentially by a shift register (3i). The associated master station can address a large number of such slave stations, sensing the variable voltage drop, and optionally choosing whether to collect one or a number of bits from each slave.

EP 0 454 467 A1

3c

RECEIVED
DATA

3d

3f

3e

RECEIVED
CLOCK

LOAD    CK

OUT

3i

DATA FOR
TRANSMISSION

5

V+

3

4

3b

3a

3g

3h

Figure 3

Cad Index Page No.= 01009

This invention relates to the electrical transmission of data between a large number of slave stations and a single master station, using a matrixed wire medium that is particularly appropriate for a total system extent of a few metres.

It is well known to use data transmission systems where the source and destination addresses are encoded serially upon a small number of wires together with the data: indeed this is to be preferred for long distances because of the economy of wires that results. It is also well-known to encode addresses and data in parallel upon a number of wires: indeed this is preferred for very localised "data busses". However, the need to generate and decode addresses at each station implies a significant cost overhead in both cases.

It is also known to use a matrix of wires, with devices at each cross-point of the matrix, the devices being addressed by their X and Y co-ordinates in the matrix. Hitherto, such a matrix principle has only been applied for one direction of transmission at a time - for example in the gathering of key-press information from an alpha-numeric keyboard or the excitation of light-sources in a matrixed display. The combination of simultaneous data transmission in both directions and the transmission of serial data has not been possible hitherto with a matrixed-wire medium.

According to the present invention there is provided a method and apparatus for bi-directional data transmission employing a first group of m wires and a second group of n wires arranged as a matrix with m x n crosspoints, also employing a plurality of slave stations each connected between one wire of the first group and one wire of the second group at one of said crosspoints and having a resistance value that is coded to represent data that is to be transmitted from said slave station, and also employing a master station arranged firstly to allow current flow in only one of said first groups of wires and secondly to complete the path for said current flow sequentially via one or a plurality of said second groups of wires so as to address by current flow one or a plurality of said slave stations and thirdly to measure the voltage between, or the current flowing through, a pair of wires one from each of said first and second groups, so as to allow the value of resistance of each addressed slave station to be interpreted by said master station, and fourthly to modulate said current flow in intensity or duration so as to transmit data from said master to said slave station.

The invention provides the advantages of high speed collection of variable amounts of data from a large number or sources, without requiring expensive terminal equipment or incurring any protocol overhead.

A specific embodiment of the invention will not be described by way of example with reference to the accompanying drawing, in which:-

Figure 1 shows in outline schematic a wire matrix and master and slave units.

Figure 2 shows in schematic form details of the master unit.

Figure 3 shows in schematic form details of a slave unit.

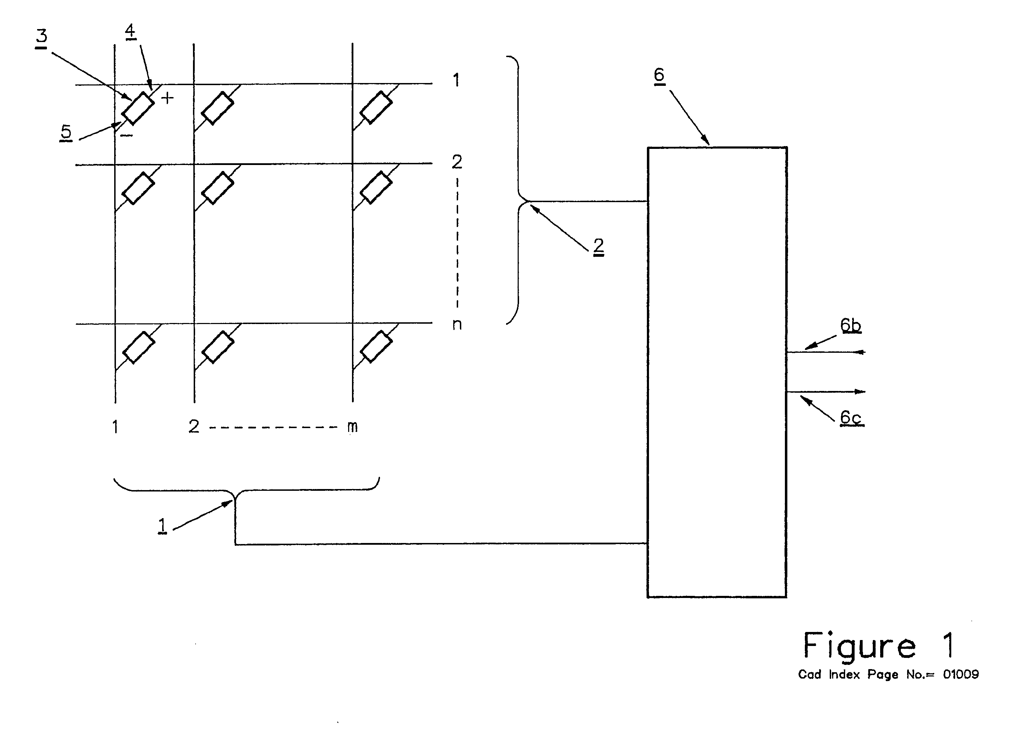

Figure 1 illustrates the known principles of matrix selection, and provides a reference for the following description of the present invention. A first group of m wires 1 and a second group of n wires 2 are arranged so that up to m x n slave stations may be connected between one wire of the first group and one wire of the second group. For example, the slave station 3 has its positive terminal 4 connected to the first wire of the second group and its negative terminal 5 connected to the first wire of the first group 1. The master station 6 selects an individual slave station by connecting one wire of the first group to a positive electrical source and one wire of the second group to a negative electrical sink.

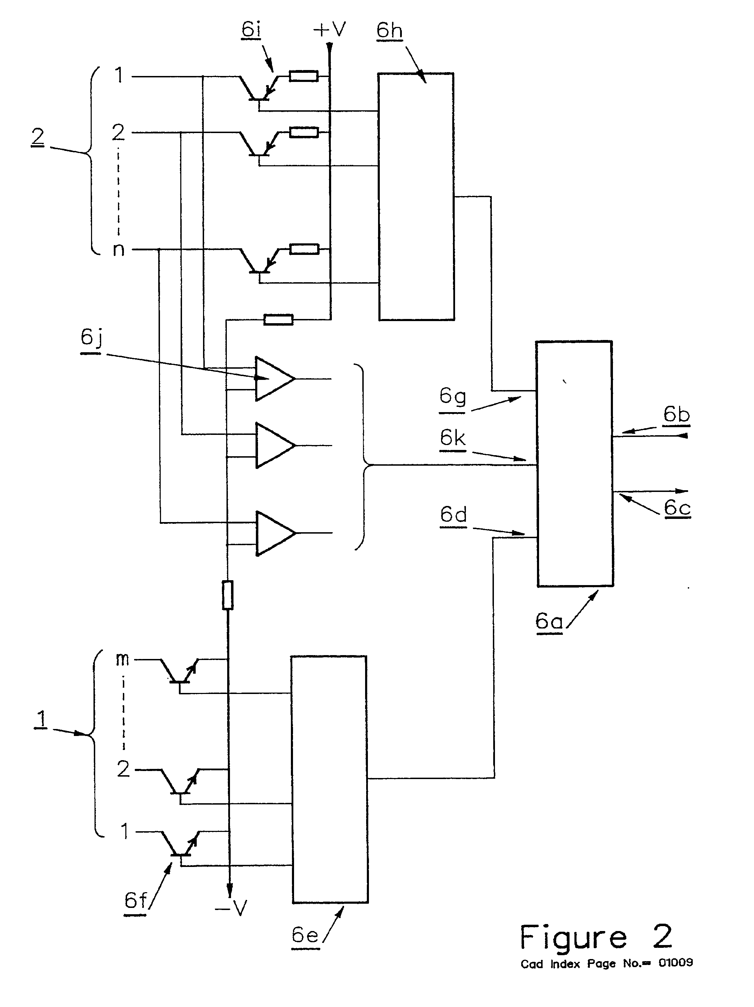

Figure 2 shows details of the master station 6 of the present invention. A microprocessor 6a controls the matrix addressing and the transmission and reception of data, and passes this data to the user via ports 6b and 6c. A binary-coded scanning signal from port 6d is decoded at 6e to connect the m wires in the first group one-at-a-time to the negative supply pole via transistor switches such as 6f. If m = 64, that is $2^6$, for example, then port 6d will comprise 6 wires. The second group of wires may also be addressed one-at-a-time, but may advantageously be addressed several-at-a-time to increase the overall rate at which data may be transmitted. In the general case, the port 6g may comprise n wires so that the microprocessor 6a has complete control over the addressing mode.

Each member of the second group of wires is selected by the setting of a low level on the appropriate output of latch 6h. The resistor-transistor combination such as 6i for wire 1 will then establish a defined selection current from the positive supply pole which will pass through the addressed slave station and return via a transistor switch such as 6f.

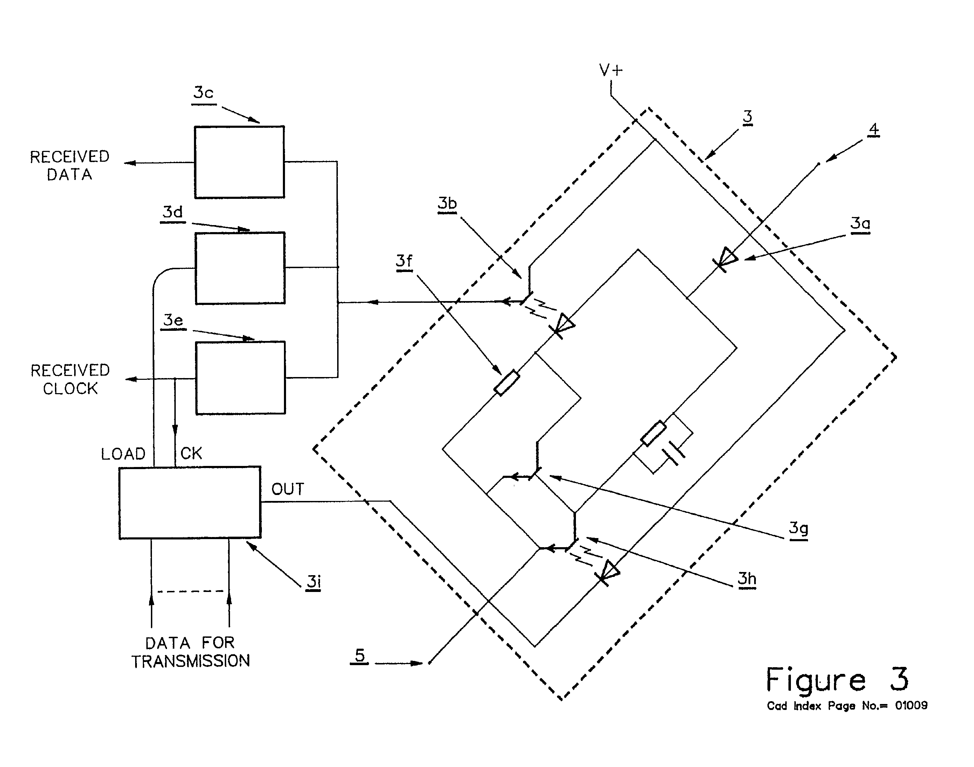

The programme of microprocessor 6a may send '0' or '1' bits to the addressed slave by generating short or long selection pulses, and a stream of such pulses may be sent to form a byte of information. The decoding of such data will be described later with reference to figure 3. It will be evident that analogue or digital information might also be sent to the slave station by varying the magnitude of the selection current.

Data from the slave station may be represented by varying voltage-drop across the elements of the slave. This voltage drop may be classified as representing '0' or '1' by a signal-conditioning comparator such as 6j and presented to the microprocessor via port 6k. It will be evident that analogue information might be received from the slave station by substituting an analogue-to-digital converter for the comparator at 6j, and that the data returned during a stream of selection pulses might represent a digital byte or a series of different analogue signals.

Figure 3 shows details of a slave station 3 of the present invention. Between the matrix connections 4 and 5 is a principal series connected circuit comprising blocking diode 3a which is a common feature of matrix circuits serving to prevent the spurious energisation of three slave stations in series, receiving opto-coupler 3b which responds to the current from the master station and provides a galvanically isolated signal to timing circuits 3c, 3d, and 3e, and resistor 3f which may be controllably shorted-out by switching transistor circuit 3g and opto-isolator 3h in response to digital data appearing at the output of shift-register 3i so as to transmit this data to the master station for conditioning as described in connection with 6j of figure 2.

The timing circuit 3e is a negative-edge triggered monostable that signals the end of a selection pulse from the master. This is the correct time for the functional slave circuits to interpret the output of the positive level-triggered monostable 3c, which will still be low if the selection pulse was short, or high if it was long, thus decoding the data from the master station.

The output of 3e also advances the data stored in shiftregister 3i, so that the next bit is presented via optocoupler 3h ready for the next selection pulse. However, if the master station programme does not require further bits at this time, and instead addresses another slave unit, then the negative level monostable 3d will time out and cause the shift register 3i to reload in parallel mode with a new sample from the functional circuits of the slave.

The master station thus has the flexibility to send and receive just one bit per slave station in one bit period, or a larger number of bits in a proportionally longer time, and so can adapt its addressing strategy according to the urgency of the information. In an application where m = 64, n = 8, and the maximum bit rate is 100KBit per second per wire, the system data rate when all 8 wires of the second group are used simultaneously is 800KBit per second. If all matrix crosspoints are populated then there will be 8 x 64 = 512 slave stations, and so 1 bit could be collected from each slave station in a total scan time of 512/800,000 = 0.64 milliseconds. If one bit were to be simultaneously sent to each slave, then the increased selection pulse length for a 2-level digital code would result in an average total scan time of between 0.64 and 1.28 milliseconds. If there were 8 bits to be collected from each slave station the total scan time would be 8 x 512/800,000 = 5.12 milliseconds.

It is within the scope of the present invention for the microprocessor 6a of figure 2 to be programmed to interleave a number of scanning strategies such as those just described, for example, so as to receive 1 bit from each slave unit frequently, to receive 8 bits less frequently and to transmit 1 bit even less frequently. Using the figures of the previous example the collection of 1 bit from all slave stations with a total scan time of 0.64 milliseconds might be followed by the sending of one bit to 2 slave stations in 0.04 milliseconds or less, and the collection of 8 bits from 4 slave stations in 0.32 milliseconds. This sequence would take up to 1 millisecond in total after which it might be repeated with the sending of 1 bit and the receiving of 8 bits from other slave stations. The overall effect would be to receive 1 bit from each slave station with a maxium delay of 1 millisecond, to send one bit to each slave station with a maximum delay of 256 milliseconds, and to receive 8 bits from each slave station with a maximum delay of 128 milliseconds.

It is to be understood that the above description is by way of example and does not limit the invention. In particular, the positive and negative polarities may be reversed, the order of connection of series elements may be changed, the use of defined-current feed and voltage-drop measurement may be replaced by defined-voltage feed and current flow measurement, the number of wires of the second group that are simultaneously selected may be changed, and the pattern of interleaving of scanning strategies may be varied.

## Claims

1. A method for bidirectional data transmission characterised by employing a first group of m wires and a second group of n wires arranged as a matrix with m x n crosspoints, also employing a plurality of slave stations each connected between one wire of the first group and one wire of the second group at one of said crosspoints and having a resistance value that is coded to represent data that is to be transmitted from said slave station, and also employing a master station arranged firstly to allow current flow in only one of said first group of wires and secondly to complete the path for said current flow sequentially via one or a plurality of said second group of wires so as to address by current flow one or a plurality of said slave stations and thirdly to measure the voltage between, or the current flowing through, a pair of wires one from each of said first and second groups, so as to allow the value of resistance of each addressed slave station to be interpreted by said master station and fourthly to modulate said current flow in intensity or duration so as to transmit data from said master to said slave station.

2. A method according to Claim 1 in which the resistance of a said slave station is switched between 2 levels to represent binary digital signals.

3. A method according to claim 1 or 2 in which the repeated provision of said current flow by the master station to one of said slave stations causes different data to be trannsmitted or received.

4. A method according to claim 3 in which the number of times that said current flow is repeated is varied during the addressing sequence.

5. Apparatus for bidirectional data transmission characterised by embodying a first group of m wires and a second group of n wires arranged as a matrix with m x n crosspoints, also embodying a plurality of slave stations each connected between the wires of the first and second groups at one of said crosspoints and including a resistance that is modulated to represent data that is to be transmitted from said slave station, and also embodying a master station including firstly switching means connected to allow current flow in only one of said first group of wires and secondly a source of electrical energy connectable in series with each member of said second group of wires so as to complete a path or paths for said current flow, and thirdly voltage or current signal conditioning means connected respectively in parallel or series with said source of energy so as to decode the data content, and fourthly control means to modulate said source of electrical energy in intensity or duration according to data which is to be transmitted from said master station to said slave station.

6. Apparatus according to claim 5 in which said resistance in said slave stations is switched between two values to represent binary digital signals.

7. Apparatus according to claims 5 or 6 in which a said slave station includes a shift register and also timing means sensitive to the periodicity of pulses of said electrical energy adapted to present a sequence of items of data for transmission in response to the receipt of a rapid sequence of said pulses, and in which said master station includes means to generate said rapid sequence of pulses.

8. Apparatus according to claim 7 in which said master station includes means to change the number of pulses in said rapid sequence of pulses of electrical energy.

9. Apparatus according to claims 5, 6, 7 or 8 in which a said slave station includes further timing means sensitive to the duration of pulses of said electrical energy so as to decode the data content thereof.

10. Apparatus according to claims 5, 6, 7, 8 or 9 in which a said slave station includes opto-isolators arranged to provide galvanic isolation between the circuits immediately connected to the wires of said matrix and those functional circuits wherein said data is processed.

Figure 1

Cad Index Page No.= 01009

Figure 2

Figure 3

Cad Index Page No.= 01009

**European Patent Office**

# EUROPEAN SEARCH REPORT

Application Number

| DOCUMENTS CONSIDERED TO BE RELEVANT | | | EP 91303764.4 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | ES - A6 - 2 009 663 (FORNES CALLIS) * Abstract; column 2, line 41 - column 4, line 36; fig. 1,2 * & EP-A1-0 368 780 (16.05.90) -- | 1,5 | H 04 Q 9/00 H 04 L 5/14 H 04 L 12/28 |
| A | DE - A1 - 3 613 108 (LUMINO LICHT ELEKTRONIK) * Abstract; column 4, line 49 - column 6, line 4; fig. 1,2 * -- | 1,5 | |
| A | WO - A1 - 85/01 168 (SONY) * Abstract; fig. 1 * -- | 1,5 | |
| A | EP - A2 - 0 306 934 (WILLEMIN ELECTRONIC) ---- | | |

|  |  | TECHNICAL FIELDS SEARCHED (Int. Cl.5) |
|---|---|---|
| | | H 04 Q H 04 L G 06 F |

The present search report has been drawn up for all claims

| Place of search | Date of completion of the search | Examiner |
|---|---|---|
| VIENNA | 16-08-1991 | HAJOS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)